# EUROPEAN PATENT SPECIFICATION

(11) **EP 0 925 146 B1**
(45) Date of publication and mention of the grant of the patent: **28.02.2001**
(21) Application number: 97936807.3
(22) Date of filing: 21.08.1997
(51) Int. Cl.: B24B 5/42, B24B 49/04

(54) **IMPROVEMENTS IN AND RELATING TO WORKPIECE GRINDING**
VERBESSERUNGEN IN/ODER BEZÜGLICH WERKSTÜCKSCHLEIFEN
PERFECTIONNEMENTS APPORTES AU MEULAGE DE PIECES DE TRAVAIL

(30) Priority: 13.09.1996 GB 9619186; 06.08.1997 GB 9716530
(43) Date of publication of application: 30.06.1999
(73) Proprietor: Unova U.K. Limited, Aylesbury, Buckinghamshire HP20 2RQ (GB)
(72) Inventor: PICKLES, John David, Skipton, North Yorkshire BD23 5PN (GB); CLEWES, Stuart, Keighley, West Yorkshire BD22 7QX (GB)
(74) Representative: Nash, Keith Wilfrid
(86) International application number: GB9702272
(87) International publication number: WO9810891

(56) References cited:
- EP-A- 0 562 632
- DE-A- 2 936 251
- GB-A- 2 161 101
- GB-A- 2 219 231
- US-A- 4 201 016
- US-A- 5 562 523

## Description

### Field of invention

This invention concerns the grinding of workpieces such as crankpins and journal bearing sections of crankshafts in which the rotation of the workpiece and the rotation of the grinding wheel is under numerical control in which workpiece gauging means is provided by which the diameter of the component being ground can be accurately determined.

A method according to the preamble of claim 1 and an apparatus according to the preamble of claim 13 are known from US-A-4 201 016.

Particularly when grinding off-axis components such as crankpins, errors can arise which introduce non-circularity into the cross-sectional shape of the component (in this case a crankpin). One such source of error arises from the fact that the main axis of the crankshaft will normally lie in the same plane as the axis of rotation of the grinding wheel which means that except for the 3 o'clock and 9 o'clock positions of the crankpin, the axis of the latter will be above or below the plane containing the axes of rotation of the grinding wheel and crankshaft. Since the former has to be advanced and retracted parallel to that plane so as to follow the crankpin and maintain grinding contact therewith, it will be seen that except in the case of a grinding wheel of infinite diameter the curvature of the grinding edge means that the advance and retreat of the grinding wheel has to follow a more complex relationship than would otherwise apparently be the case. Any inaccuracy in the grinding wheel movement will result in peaks or troughs in the ground surface of the component and because of the cyclic nature of the errors, these will typically appear at equally spaced intervals around the component so as to produce for example, two high points and two troughs, or four high points and four troughs etc.

Although correction algorithms can he introduced into the control signals applied to the drive for the wheelhead. some of the errors can arise as a result of component vibration or movement caused by the grinding wheel thrust on the workpiece and these can even vary depending on whether the component which is being ground is near or remote from a supported region of the workpiece.

If the component is ground to size and then gauged for diameter, it will usually be too late to make a further correction and the gauging exercise is merely to determine whether the mean diameter of the ground component and the extremes of maximum and minimum diameters therearound are within acceptable limits. Since the errors concerned are of the order of nanometres or microns in a diameter typically of the order of 20mm or more, and the ground component is itself intended merely as a cylindrical support for a rolling bearing assembly, non-circularity errors such as described have been accepted as an essential, albeit unwanted, by-product of automated machining of such components. In practice, non-circularity errors of this nature only tend to appear as a factor which will effect the long-term wear characteristics of a bearing associated therewith and heat produced by friction or other factors is readily accommodated within a typical internal combustion engine environment due to the large quantities of lubricating oil circulating around the crankshaft.

It is nevertheless desirable to eliminate such sources of wear and heat generation so as to optimise the life of the bearings associated with crankpins.

Although usually to a smaller extent, journal bearing sections of crankshafts can also exhibit non-circularity errors as a result of grinding, and these errors can also result in extra wear and heat generation and reduced life expectancy of the bearings associated therewith.

As with the circularity errors in the crankpins, it is desirable to eliminate all such errors if possible so as to optimise the component life and the overall useful life of an internal combustion engine and it is an object of the present invention to provide a method and apparatus by which errors in circularity of ground components such as crankpins and journal bearings of crankshafts can be reduced if not eliminated.

### Summary of the Invention

According to one aspect of the present invention there is provided a method of grinding a crankshaft component such as a crankpin in which the component is engaged by a rotating grinding wheel and ground until the component is just oversize by an expected amount, typically of the order of 50 microns. at which stage the wheelfeed is arrested to permit spark-out over a further revolution of the component, thereafter the component is gauged at a plurality of positions about its circumference and the diameters computed and the computed values are stored in relation to the rotational position of the component at which it is gauged and a feed control signal is generated from that information for use during subsequent grinding of the component to control the wheelfeed so as to take into account any out-of-roundness detected from the plurality of diametric measurements obtained from the gauging, and the wheelhead is advanced once again to begin grinding using the control signal derived from the gauged information, so that as the component is finish ground, high points are removed and a more circular component is generated than would otherwise result.

According to a preferred feature of the invention, the multiple position gauging of the component is repeated during a plurality of successive rotations of the component, and the gauging is synchronised with the rotation of the component so that each of the plurality of readings is taken at the same angular position of the component during each of the rotations thereof, and a mean value for the component diameter at each of the different angular positions is derived from the plurality of readings obtained at each said angular position. It has been found that by deriving the mean of a plurality of such readings, errors which can arise due for example to the presence of coolant. can be substantially eliminated, and smoothing the data derived from the gauging operation can reduce, if not eliminate. chatter during the subsequent grinding step.

Preferably the overall process of gauging and generating a feed control signal for the finish grinding step of each component, is performed for each component as it is ground, or for every nth similar component that is ground, or after regular periods of time (such as two or three hours of component grinding), or once every shift or working day, or other convenient period, such as week or month, depending on the level of accuracy required.

Where the process is undertaken for each component, a dedicated feed control signal is generated for each final finish grinding step of each component and this feed control signal need not be stored for longer than is required to complete the grinding process on the component concerned.

Where the gauging and feed control signal generating step is not performed for every component, but only after so many components have been ground or after predetermined periods of time etc, then the method includes the step of storing the correction signal generated from the last gauging operation for use during the finish grinding step of each component thereafter until the next gauging and control signal generating process is undertaken.

The method of the invention is not intended to replace the usual quality control environment within which components such as crankshafts arc produced. Any errors detected using conventional quality control techniques can be combined with the present invention to reduce the incidence of incorrect components.

The invention also lies in apparatus for performing the above method comprising a grinding machine, workpiece holding and rotating means for locating and rotating the workpiece in the machine, a grinding wheel and wheelhead assembly movable towards and away from the workpiece to engage and grind the latter, drive means for effecting the movement of the wheelhead towards and away from the workpiece, workpiece engaging gauge means by which the diameter of selected regions of the workpiece can be measured, signal processing means receptive of signals indicative of the dimensions measured by the gauging means, rotation position sensing means associated with the workpiece, and/or a component located thereon, for determining the angular position of the workpiece with reference to a datum, means for generating a signal indicative of that angular position, means for storing information regarding the diameters of the workpiece derived from the dimensioned data from the gauging with the angular position for which the workpiece diameter has been computed, and programmable computer means for converting the stored information into a control signal by which the wheelhead drive means can be controlled during a subsequent grinding operation of the workpiece, and storage means for storing the said control signal.

Since it is necessary to arrest the grinding of the workpiece prior to the final size of the part thereof which is to be ground, the machine preferably further includes means for storing wheelhead control signals for controlling the advance of the wheelhead, which signals are adjustable to enable the advance of the wheelhead to be arrested at an appropriate point at which the workpiece part is still oversize relative to its final desired diameter. Means may be provided, to advantage, to enable the operator to adjust the position at which the advance is arrested so as to determine the extent of the oversize dimension at which the grinding is stopped and the gauging step of the invention is initiated.

Where the control signals for controlling the wheelhead drive during the final finish grinding step are to serve as the control signals for a large number of subsequent grinding operations, the means for storing the control signals is preferably of a permanent nature such that if the power is removed from the machine, the signals are still retained ready for subsequent use when power is restored.

Conveniently the storage medium is a magnetic data disc or tape or an EPROM or like device.

The invention is not limited to the correction of the grinding of eccentric components such as crankpins but may also be applied to the grinding of journal sections of workpieces, such as cylindrical journal bearing regions of crankshafts.

As applied thereto, the invention comprises the steps of stopping the main grinding process whilst the cylindrical region is still oversize by an amount which is greater than the maximum out-of-roundness which from experience or previous observation is likely to be found as a result of the grinding process, the cylindrical region is then subjected to spark-out and gauged at a plurality of angularly spaced positions around its circumference and the diameter is computed for each of the positions at which measurements are made, and the diameter values are stored in combination with data describing the angular position of the workpiece corresponding thereto, a feed control signal for controlling the advance of the grinding wheel head during a final grinding step, to grind the cylindrical region to size, is generated from the stored information relating to the angular positions and diameters of the said region, and the feed to the grinding wheelhead is reinstated and the said generated feed control signals are employed to control the wheel-feed during the final grinding step.

As before, the workpiece may be rotated through a number of complete rotations and gauged at the same angular position during each of the succession of rotations and a mean value for the diameter at each of the different angular position may be computed and stored as the diameter value for each of the said angular positions.

Without further information, the method will not identify any eccentricity of a cylindrical region relative to the axis of rotation of the workpiece, and preferably the invention includes the step of sensing any eccentricity of the cylindrical region during the said rotation of the workpiece during the gauging step and combining this information with the angular position information and the diameter information, to produce a composite control signal for the wheelhead drive so that any eccentricity of the cylindrical region which has been ground, is also removed or reduced during the final grinding step.

If a cylindrical workpiece region is rotated and the axis of rotation is coincident with the centre of the circular cross-section, then assuming the circumference of the cylindrical region is a true cylinder, all of the points on the surface will pass through the same point in space as the workpiece is rotated about the said axis. Put another way, if a probe is positioned so as to just make contact with such a rotating cylindrical surface, there will be no tendency during those rotations for the probe to move relative to the axis of rotation, and the probe will remain stationary at a constant distance (equal to the radius of the cylindrical region) from the axis of rotation.

Any eccentricity means that the axis of the circular shape is no longer coincident with the axis about which the workpiece is rotating. This displacement will appear as a displacement of the probe if the latter is sprung loaded or otherwise kept in contact with the rotating surface of the workpiece. By providing such a probe with movement sensing means and an encoder associated therewith, electrical signals can be generated indicative of any amount by which the probe moves so as to maintain contact with the rotating cylindrical surface, and by combining the linear distance signals obtained from the encoder means with the angular position signals derived from an encoder associated with the rotation of the workpiece (or the numerical control signals supplied to the workpiece drive means), so a set of measurements can be obtained corresponding to the angular positions at which the diameter of the component is computed which also indicate for each said angular position the amount by which the axis of the cylindrical region is non-coincident with the axis about which the workpiece is rotating. A composite control signal can then be derived by correlating the linear dimension signal derived from the probe encoder with the diameter and therefore radius at the same angular position and a control signal generated which, if applied, will result in just the correct amount of material to be ground away from the surface such as to restore it to the desired radius, albeit now centred on the true centre of rotation of the workpiece.

Computing means is preferably provided for computing the control signal values using algorithms and look-up table and a memory provided for storing the control signals therein ready for synchronous readout and to generate a control signal for the wheelhead drive means during the final stage of grinding.

In both aspects of the invention, the generation of the control signals for the final stage of grinding may in each case comprise the combination of a basic control signal with an error signal in which the latter is derived from the gauge and prohe associated with the measurements performed on the workpiece part, so that the amount of data to be stored for generating the final control signal is reduced to error signals which for some of the time may be zero.

Eccentricity sensing may be achieved by a sensor or probe attached to the gauge to detect any oscillatory movement of the gauge as the workpiece is rotated between the jaws of the gauge, or by a single probe which is separate from the chordal gauge used to determine the diameter of the component, which single probe is brought into contact with the cylindrical surface and after being zeroed will generate an error signal indicative of the movement of the probe relative to the axis of rotation about which the workpiece rotates (which is deemed to be fixed). Any non-zero values of this error signal are indicative of any eccentricity of the component relative to that axis of rotation.

Although the invention has so far been described in connection with a method in which the grinding is arrested whilst gauging occurs, it is of course possible to use in-process gauging and where appropriate, in-process eccentricity measurement, storing the computed diameters and eccentricities for different angular positions of the workpiece as it is rotated, and generating control signals for subsequent control of the wheelhead feed in such a way as to reduce any departures from the target diameter and target "eccentricity" for the workpiece region which is being ground, during subsequent grinding thereof. It will be appreciated that in order to achieve this, much greater computing power and higher speed data processing will probably be required than when the wheelhead feed control signals are generated from measurements made on the workpiece or part thereof whilst it is rotated out of engagement with the grinding wheel. This arises from the fact that if grinding has ceased, apart from the need to re-instate grinding as soon as is possible from an overall process point of view, the processing of the data to generate the final wheelhead feed control signal can take as long as is necessary, since grinding will not he initiated until after the control signals have been generated and the system is once again re-engaged in the grinding mode. By contrast, if the control signals are being generated "on the fly", even as the in-process gaugings and eccentricity measurements are being obtained and presented for processing, more material is being removed from the component by the grinding process.

A hybrid arrangement which may represent a more efficient compromise involves a step-wise grinding process during the final grinding of the component or region of the workpiece, in which the wheclhead is advanced in a series of increments and makes no subsequent incremental movement in a positive feed direction (so as to remove more material from the workpiece) until all the data necessary to compute the next incremental move has been computed from the gauging and probing exercise. The advantage of this procedure is that after generating the first corrected control signal so as to reduce non-circularity or eccentricity, and applying this feed signal, the non-circularity and/or eccentricity of the ground component or region of the workpiece can be checked before any further material is removed, to ascertain whether any further correction of the feed control signal is required to more perfectly conform the component that is being ground to the target size and degree of concentricity.

Where the final phase of grinding is performed as a plurality of small incremental steps, spark-out is preferably performed at the end of each incremental step and before gauging is undertaken.

There may be provided a computer display means and a visual representation of the cross-section of the ground component is displayed therein rotating either in synchronism with, but possibly at a fraction of the rate of rotation of, the actual workpiece or component thereof, and any measured out-of-roundness or non-circularity or eccentricity relative to the axis of rotation is converted into control signals for distorting the circular shape and/or position thereof relative to the axis of rotation in the visual display of the component so that the error in the component and its relative angular position around the component may be seen in the display. Any such out-of-roundness and/or eccentricity may be exaggerated in the display by a factor which is either pre-programmed or can be selected by the user, so that any error in the component or workpiece is exaggerated in the display to allow it to be seen by the naked eye. The ohserver will then be able to see the result of a correction signal subsequently applied.

### Brief Description of the Drawings

The invention will now be described, by way of example only, with reference to the accompanying drawings in which:
**Figures 1a and 1b** show a sequence of grinding cycle steps required to be initiated by a programme running on a computer controlled grinding machine in order to perform the invention; and
**Figure 2** is a graphical representation of the relative feed of the grinding wheel against time for one cycle of operation.

### Detailed Description of the Drawings

The grinding process to be described relates to a known CNC grinding machine with an in-process gauge for grinding in particular the crankpins of a crankshaft for an internal combustion engine.

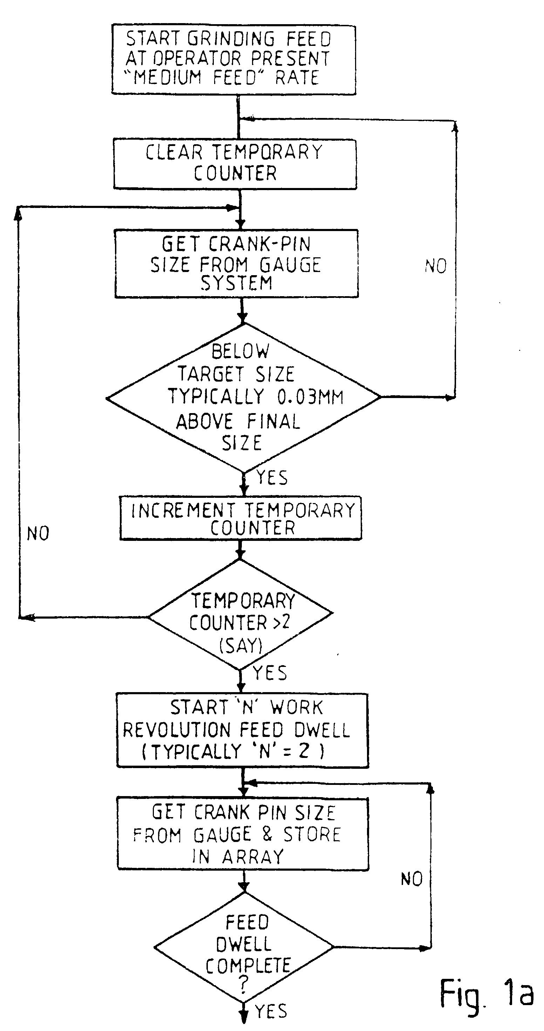

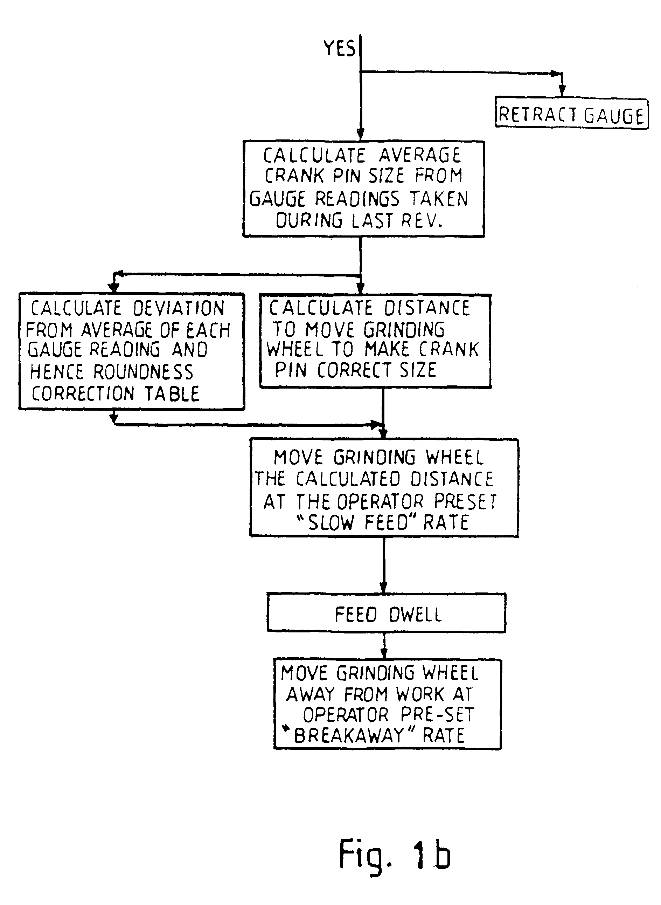

Figures 1a and 1b show the commands and programmed steps a computer (not shown) controlling the grinding machine must generate, the input it must respond to, and the decisions it must make, under the control of the programme loaded into its memory.

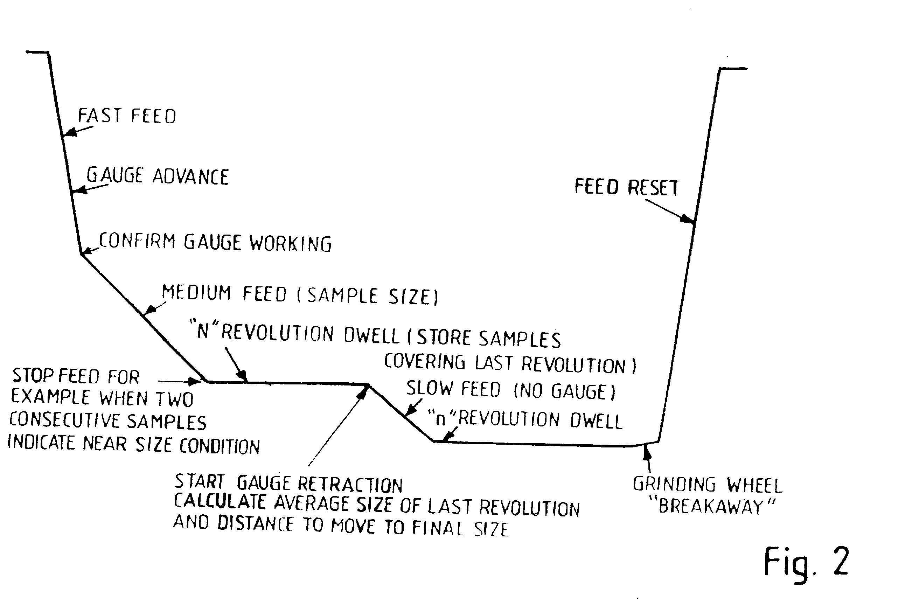

The various steps making up the method of fast accurate determination of, and subsequent control of crank pin size is shown graphically in Figure 2 which is a labelled graph of the CNC crankpin gauged grinding cycle performed by the grinding machine when controlled by a computer program so as to perform the steps of Figures 1a and 1b.

An initial fast grinding feed is used to "roundout" the crankpin. During this feed the in-process sizing gauge is advanced onto the crankpin. The fast grinding feed is stopped after a fixed feed amount, independent of the gauge. At the end of the fast feed the gauge is used by the machine control computer to sample the size of the crankpin. A prerequisite for the grinding cycle to proceed beyond this point is that this sample of size sensibly confirms that the gauge is on the crankpin and functioning properly.

After confirming that the gauge is functioning properly the grinding feed restarts at the medium rate of feed. In normal operation this feed will be stopped in response to signals derived from the in-process gauge as sampled by the machine control computer as follows.

Whilst the grinding feed is proceeding towards a target size near final size, typically 0.030mm on diameter above final size, the instantaneous size of the crankpin being ground is continuously sampled by the machine control computer.

If one or two or more consecutive samples of crank pin size are found to be at or below the target size, the controlling computer immediately stops the grinding feed and initiates a feed dwell. This dwell, measured as N revolutions of the crankpin (typically 2 revolutions) permits the crankpin to achieve good geometric roundness and a stable size. This procedure gives an optimum response to fast grinding feeds commensurate with fast manufacturing times. During this feed dwell the controlling computer stores a number of consecutive samples of crankpin size measured at different angular positions of the pin relative to the gauge fingers so that it can calculate an average value of the pin diameter.

As shown in Figure 1b, any deviation of each diameter computation (or direct reading by the gauge, depending on the type used) from the computed average diameter, is stored in association with the corresponding angular position of the pin at the time, so that the roundness of the pin can be indicated, and/or plotted or displayed if desired, and a roundness correction table generated.

At the completion of this dwell, the average diameter value is calculated, and this value used to calculate the feed distance to achieve the desired final size of the pin. At the same time the roundness correction table is used in the computation to provide the correct positioning of the grinding wheel with respect to the relevant angular position of the pin so as to minimise roundness errors in the pin. The controlling computer then initiate an incremental feed to final size. At the start of this incremental feed, the gauge, having completed its work, is retracted, with the object of minimising manufacturing time.

Because the feed to final size is not being controlled by gauge, it does not have to be slow but can be optimised to eliminate the build-up of machining vibrations and/or minimise machining time.

After a final "sparkout feed dwell", measured as n revolutions of the pin, the grinding wheel is retracted, initially at a slow rate so as not to leave any grinding wheel breakaway mark, and then at a fast rate to minimise manufacturing time.

## Claims

1. A method of grinding a crankshaft component such as a crankpin in which the component is engaged by a rotating grinding wheel and ground until the component is just oversize by an expected amount, typically of the order of 50 microns, at which stage the wheelfeed is arrested to permit spark-out over a further revolution of the component, thereafter the component is gauged at a plurality of positions about its circumference and the diameters computed, characterised in that the computed values are stored in relation to the rotational position of the component at which it is gauged and a feed control signal is generated from that information for use during subsequent grinding of the component to control the wheelfeed so as to take into account any out-of-roundness detected from the plurality of diametric measurements obtained from the gauging, and the wheelhead is advanced once again to begin grinding using the control signal derived from the gauged information, so that as the component is finish ground, high points are removed and a more circular component is generated than would otherwise result.

2. A method according to claim 1 in which the multiple position gauging of the component is repeated during a plurality of successive rotations of the component, and the gauging is synchronised with the rotation of the component so that each of the plurality of readings is taken at the same angular position of the component during each of the rotations thereof, and a mean value for the component diameter at each of the different angular positions is derived from the plurality of readings obtained at each said angular position.

3. A method according to claim 1 or claim 2 in which the overall process of gauging and generating a feed control signal for the finish grinding step of each component, is performed for each component as it is ground, or for every nth similar component that is ground, or after regular periods of time (such as two or three hours of component grinding). or once every shift or working day, or other convenient period, such as week or month, depending on the level of accuracy required.

4. A method according to claim 3 wherein the process is undertaken for each component, a dedicated feed control signal is generated for each final finish grinding step of each component and this feed control signal need not be stored for longer than is required to complete the grinding process on the component concerned.

5. A method according to claim 3 wherein the gauging and feed control step is only performed after every n^{th} component or after a predetermined period, and further comprising storing the correction signal generated from the last gauging operation for use during the finish grinding step of each component thereafter until the next gauging and control signal generating process is undertaken.

6. A method according to any one preceding claim in which errors detected using conventional quality control techniques are combined with said feed control signal.

7. A method according to any one of claims 1 to 6 as applied to a cylindrical region of a workpiece rotatable about its own axis, comprising the steps of stopping the main grinding process whilst the cylindrical region is still oversize by an amount which is greater than the maximum out-of-roundness which from experience or previous observation is likely to be found as a result of the grinding process, the cylindrical region is then subjected to spark-out and gauged at a plurality of angularly spaced positions around its circumference and the diameter is computed for each of the positions at which measurements are made, and the diameter values are stored in combination with data describing the angular position of the workpiece corresponding thereto. a feed control signal for controlling the advance of the grinding wheel head during a final grinding step, to grind the cylindrical region to size. is generated from the stored information relating to the angular positions and diameters of the said region, and the feed to the grinding wheelhead is reinstated and the said generated feed control signals are employed to control the wheel-feed during the final grinding step.

8. A method according to claim 7 in which the workpiece is rotated through a number of complete rotations and gauged at the same angular position during each of the succession of rotations and a mean value for the diameter at each of the different angular position is computed and stored as the diameter value for each of the said angular positions.

9. A method according to any one of claims 1 to 8, further comprising the step of sensing any eccentricity of the cylindrical region during the said rotation of the workpiece during the gauging step and combining this information with the angular position information and the diameter information, to produce a composite control signal for the wheelhead drive so that any eccentricity of the cylindrical region which has been ground, is also removed or reduced during the final grinding step.

10. A method according to any one of claims 1 to 9 in which in-process gauging and eccentricity movement is used, and further comprising the stages of storing the computed diameters and eccentricities for different angular positions of the workpiece as it is rotated, and generating control signals for subsequent control of the wheelhead feed in such a way as to reduce any departures from the target diameter and target "eccentricity" for the workpiece region which is being ground, during subsequent grinding thereof.

11. A method according to claim 10 further comprising a step-wise grinding process during the final grinding of the component or region of the workpiece, in which the wheelhead is advanced in a series of increments and makes no subsequent incremental movement in a positive feed direction (so as to remove more material from the workpiece) until all the data necessary to compute the next incremental move has been computed from the gauging and probing exercise.

12. A method according to claim 11 in which spark-out is performed at the end of each incremental step and before gauging is undertaken.

13. Apparatus for performing the method according to any one preceding claim, comprising a grinding machine, workpiece holding and rotating means for locating and rotating the workpiece in the machine, a grinding wheel and wheelhead assembly movable towards and away from the workpiece to engage and grind the latter, drive means for effecting the movement of the wheelhead towards and away from the workpiece, workpiece engaging gauge means by which the diameter of selected regions of the workpiece can be measured, signal processing means receptive of signals indicative of the dimensions measured by the gauging means, characterised by rotation position sensing means associated with the workpiece, and/or a component located thereon, for determining the angular position of the workpiece with reference to a datum, means for generating a signal indicative of that angular position, means for storing information regarding the diameters of the workpiece derived from the dimensioned data from the gauging with the angular position for which the workpiece diameter has been computed, and programmable computer means for converting the stored information into a control signal by which the wheelhead drive means can be controlled during a subsequent grinding operation of the workpiece, and storage means for storing the said control signal.

14. Apparatus according to claim 13 and further comprising means for storing wheelhead control signals for controlling the advance of the wheelhead, which signals are adjustable to enable the advance of the wheelhead to be arrested at an appropriate point at which the workpiece part is still oversize relative to its final desired diameter.

15. Apparatus according to claim 13 in which means are provided to enable the operator to adjust the position at which the advance is arrested so as to determine the extent of the oversize dimension at which the grinding is stopped and the gauging step is initiated.

16. Apparatus according to any one of claims 13 to 15 in which said means for storing information is of a permanent nature.

17. Apparatus according to claim 16 in which said means comprises a magnetic data disc or tape or an EPROM or like device.

18. Apparatus according to any one of claims 13 to 17 further comprising a probe with movement sensing means and an encoder associated therewith, whereby electrical signals can he generated indicative of any amount by which the probe moves so as to maintain contact with the rotating cylindrical surface, and by combining the linear distance signals obtained from the encoder means with the angular position signals derived from an encoder associated with the rotation of the workpiece (or the numerical control signals supplied to the workpiece drive means), so a set of measurements can be obtained corresponding to the angular positions at which the diameter of the component is computed which also indicate for each said angular position the amount by which the axis of the cylindrical region is non-coincident with the axis about which the workpiece is rotating.

19. Apparatus according to claim 18 in which computing means is provided for computing the control signal values using algorithms and look-up table, and a memory provided for storing the control signals therein ready for synchronous readout and to generate a control signal for the wheelhead drive means during the final stage of grinding.

20. Apparatus according to claim 19 in which said control signal for the final stage of grinding comprises the combination of a basic control signal with an error signal in which the latter is derived from the gauge and probe associated with the measurements performed on the workpiece part, so that the amount of data to be stored for generating the final control signal is reduced to error signals which for some of the time may be zero.

21. Apparatus according to any one of claims 18 to 20 in which the probe is attached to the gauge to detect oscillatory movement of the gauge as the workpiece rotates, or comprises a single probe.

22. Apparatus according to any one of claims 13 to 21 in which said gauge means is an in-process gauge.

23. Apparatus according to any one of claims 13 to 22 in which a computer display means and a visual representation of the cross-section of the ground component is displayed therein rotating either in synchronism with. hut possibly at a fraction of the rate of rotation of, the actual workpiece or component thereof, and any measured out-of-roundness or non-circularity or eccentricity relative to the axis of rotation is converted into control signals for distorting the circular shape and/or position thereof relative to the axis of rotation in the visual display of the component so that the error in the component and its relative angular position around the component may be seen in the display.

24. Apparatus according to claim 23 in which such out-of-roundness or eccentricity is exaggerated in the display by a factor which is either pre-programmed or can be selected by the user, so that any error in the component or workpiece is exaggerated in the display to allow it to be seen by the naked eye.

## Patentansprüche

1. Verfahren zum Schleifen einer Kurbelwellenkomponente, z. B. eines Kurbelzapfens, in dem die Komponente durch ein rotierendes Schleifrad beaufschlagt und geschliffen wird, bis die Komponente um einen vorgegebenen Wert, typischerweise in der Größenordnung von 50 Micron, knapp überdimensioniert ist,wobei dann die Schleifscheibenzustellung arretiert wird, um ein Ausfunken über eine weitere Umdrehung der Komponente zu ermöglichen, und wobei anschließend die Komponente an einer Mehrzahl von Positionen um ihren Umfang vermessen wird, und die Durchmesser berechnet werden, **dadurch gekennzeichnet,** daß die berechneten Werte im Bezug auf die Drehposition der Komponente, bei der die Vermessung erfolgt, gespeichert werden, und ein Zustellsteuersignal aus dieser Information zur Verwendung während des nachfolgenden Schleifens der Komponente erzeugt wird, gespeichert werden, um die Schleifscheibenzustellung zu steuern und damit Unrundheiten, die aus der Mehrzahl von diametrischen, aus der Vermessung erhaltenen Meßwerten festgestellt werden, zu berücksichtigen, und daß der Schleifspindelkopf nochmals vorgeschoben wird, um den Schleifvorgang unter Verwendung des aus den Meßinformationen abgeleiteten Steuersignals beginnen, so daß dann, wenn die Komponente fertig bearbeitet ist, hohe Stellen entfernt werden und eine der Kreisform näher kommende Komponente erzeugt wird als dies sonst der Fall wäre.

2. Verfahren nach Anspruch 1, bei dem die Mehrfach-Positions-Vermessung der Komponente während einer Mehrzahl von aufeinanderfolgenden Umdrehungen der Komponente wiederholt wird, und die Vermessung mit der Rotation der Komponente sychronisiert wird, derart, daß jede der Mehrzahl von Ablesungen bei der gleichen Winkelposition der Komponente während einer jeden der Rotationen erfaßt wird, und ein mittlerer Wert für den Komponentendurchmesser bei jeder der unterschiedlichen Winkelpositionen aus der Mehrzahl von Ablesungen abgeleitet wird, die bei jeder dieser Winkelpositionen erzielt werden.

3. Verfahren nach Anspruch 1 oder 2, bei dem der Gesamtvorgang des Vermessens und Erzeugens eines Vorschubsteuersignals für die abschließende Schleifstufe einer jeden Komponente für jede Komponente beim Schleifen oder für jede n-te entsprechende Komponente, die geschliffen wird, oder nach regulären Zeitperioden (z. B. 2 oder 3 Stunden des Schleifens der Komponente), oder einmal je Wechsel oder Arbeitstag, oder nach einer anderen zweckmäßigen Periode, z. B. einer Woche oder einem Monat, je nach dem erfoderlichen Genauigkeitsgrad, durchgeführt wird.

4. Verfahren nach Anspruch 3, bei dem der Vorgang für jede Komponente durchgeführt wird, für jeden endgültigen, abschließenden Schleifschritt einer jeden Komponente ein zugehöriges Vorschubsteuersignal erzeugt wird und dieses Vorschubsteuersignal nicht länger gespeichert werden braucht als erforderlich ist, um den Schleifvorgang an der betreffenden Komponente abzuschließen.

5. Verfahren nach Anspruch 3, bei dem der Vermess- und Vorschubsteuerschritt nur nach jeder n-ten Komponente oder nach einer vorbestimmten Zeitperiode durchgeführt wird, und das Korrektursignal, das durch den letzten Meßvorgang erzeugt wird, zur Verwendung während der abschließenden Schleifstufe einer jeden Komponente im Anschluß daran bis zum nächsten Meß- und Steuersignal-Erzeugungs-Vorgang vorgenommen wird.

6. Verfahren nach einem der vorausgehenden Anspruche, bei dem Fehler, die durch Verwendung von herkömmlichen Qualitätssteuertechniken aufgezeigt werden, mit dem Vorschubsteuersignal kombiniert werden.

7. Verfahren nach einem der Ansprüche 1 bis 6 zur Anwendung auf einen zylindrischen Bereich eines um seine eigene Achse drehbaren Werkstückes, dadurch gekennzeichnet, daß der Hauptschleifvorgang angehalten wird, während der zylindrische Bereich noch Übergröße in einem Ausmaß hat, das größer ist als die maximale Unrundheit, die aus Erfahrung oder vorausgehender Beobachtung wahrscheinlich als Ergebnis des Schleifvorganges festgestellt wird, daß der zylindrische Bereich dann einem Ausfunkvorgang ausgesetzt und an einer Mehrzahl von im Winkel versetzten Positionen um seinen Umfang herum vermessen wird, daß der Durchmesser für jede der Positionen berechnet wird, an denen Messungen durchgeführt werden, daß die Durchmesserwerte in Kombination mit Daten gespeichert werden, die die Winkelposition des entsprechenden Werkstückes beschreiben, daß ein Vorschubsteuersignal zur Steuerung des Vorschubs des Schleifradkopfes während eines End-Schleifvorganges, um den zylindrischen Bereich auf Dimensionen zu schleifen, aus den gespeicherten Informationen erzeugt wird, die sich auf die Winkelpositionen und Durchmesser dieses Bereiches beziehen, und daß der Vorschub zum Schleifkopf wiederhergestellt wird sowie die erzeugten Vorschub-Steuersignale verwendet werden, um den Schleifradvorschub während der End-Schleifstufe zu steuern.

8. Verfahren nach Anspruch 7, dadurch gekennzeichnet, daß das Werkstück um eine Anzahl von vollständigen Umdrehungen gedreht und an der gleichen Winkelposition während einer jeden der Drehfolgen vermessen wird, und ein Mittelwert für den Durchmesser bei jeder der unteschiedlichen Winkelpositionen und als der Durchmesserwert für jede der Winkelpositionen berechnet und gespeichtert wird.

9. Verfahren nach einem der Ansprüche 1 bis 8, dadurch gekennzeichnet, daß jede Exentrizität des zylindrischen Bereiches während der Drehung des Werkstückes während des Messchrittes festgestellt wird, und diese Informationen mit den Winkelpositions-Informationen und den Durchmesser-Informationen komibiniert werden, um ein zusammengesetztes Steuersignal für den Schleifkopfantrieb zu erzeugen, damit jede Exentrizität des zylindrischen Bereiches, die geschliffen worden ist, bei dem End-Schleifschritt entfernt oder verringert wird.

10. Verfahren nach einem der Ansprüche 1 bis 9, bei dem während des laufenden Vorgangs eine Vermessung und eine Exzentrizitäts-Verschiebung vorgenommen wird, und die Stufen des Speicherns der berechneten Durchmesser und Exzentrizitäten für unterschiedliche Winkelpositionen des Werkstückes bei dessen Drehung gespeichert werden, sowie Steuersignale für die nachfolgende Steuerung des Schleifkopfvorschubs in solcher Weise erzeugt werden, daß jede Abweichung von dem Zieldurchmesser und der Ziel-Exzentrizität für den Werkstückbereich, der geschliffen werden soll, während eines nachfolgenden Schleifvorganges reduziert wird.

11. Verfahren nach Anspruch 10, dadurch gekennzeichnet, daß ein stufenweiser Schleifprozess während des End-Schleifens der Komponente oder des Bereiches des Werkstückes durchgeführt wird, bei dem der Schleifkopf in einer Reihe von Schritten vorgeschoben wird und keine anschließende Schritt-Bewegung in einer positiven Vorschub-Richtung macht (um mehr Material von dem Werkstück abzunehmen), bis alle zur Berechnung der nächsten Schrittbewegung erforderlichen Daten aus der Vermess- und Proben-Feststellung berechnet worden sind.

12. Verfahren nach Anspruch 11, bei dem ein Ausfunken am Ende einer jeden schrittweisen Stufe und vor der Durchführung der Vermessung vorgenommen wird.

13. Einrichtung zur Durchführung des Verfahrens nach einem der vorausgehenden Ansprüche, mit einer Schleifmaschine, einer Werkstück-Halte- und -DrehVorrichtung zum Positionieren und Rotieren des Werkstückes in der Maschine, einem Schleifrad und einer Schleifkopfanordnung, die auf das Werkstück zu und von dem Werkstück weg bewegbar ist, um in das Werkstück einzugreifen und es zu schleifen, einer Antriebsvorrichtung zur Erzielung der Bewegung des Schleifkopfes auf das Werkstück zu und von ihm weg, einer Werkstück-Eingriffs-Messvorrichtung, durch die der Durchmesser ausgewählter Bereiche des Werkstückes gemessen werden kann, und einer Signalverarbeitungsvorrichtung, die Signale aufnimmt, die die von der Meßvorrichtung gemessenen Dimensionen anzeigt, gekennzeichnet durch eine Drehpositions-Abfühlvorrichtung, die dem Werkstück und/oder einer darauf angeordneten Komponente zugeordnet ist, zur Bestimmung der Winkelposition des Werkstücks im Vergleich zu einer Bezugsstelle, eine Vorrichtung zur Erzeugung eines Signals, das diese Winkelposition anzeigt, eine Vorrichtung zu Speicherung von Informationen betreffend die Durchmesser des Werstückes, die von den dimensionierten Daten aus der Vermessung mit der Winkelposition, für die der Werkstückdurchmesser berechnet worden ist, abgeleitet werden, und eine programmierbare Rechnervorrichtung zur Umwandlung der gespeicherten Information in ein Steuersignal, durch das die Schleifkopf-Antriebsvorrichtung während eines nachfolgenden Schleifvorganges an dem Werkstück gesteuert werden kann, sowie eine Speichervorrichtung zur Speicherung des Steuersignals.

14. Einrichtung nach Anspruch 13, gekennzeichnet durch eine Vorrichtung zur Steuerung der Schleifkopf-Steuersignale für die Steuerung des Vorschubs des Schleifkopfes, wobei diese Signale einstellbar sind, um den Vorschub des Schleifkopfes an einer entsprechenden Stelle arretieren zu können, an der der Werkstückteil noch Übergröße in Bezug auf den gewünschten Enddurchmesser hat.

15. Einrichtung nach Anspruch 13, dadurch gekennzeichnet, daß eine Vorrichtung vorgesehen ist, die es dem Bedienenden ermöglicht, die Position einzustellen, bei der der Vorschub arretiert wird, damit das Ausmaß der Übergrößen-Dimension bestimmt wird, bei der der Schleifvorgang unterbrochen und der Vermessungsschritt eingeleitet wird.

16. Einrichtung nach einem der Ansprüche 13 bis 15, dadurch gekennzeichnet, daß die Vorrichtung zur Speicherung von Informationen eine Permanent-Speichervorrich-tung ist.

17. Einrichtung nach Anspruch 16, dadurch gekennzeichnet, daß die Vorrichtung eine Magnetdatenplatte, ein Magnetdatenband, ein EPROM oder eine entsprechende Vorrichtung ist.

18. Einrichtung nach einem der Ansprüche 13 bis 17, gekennzeichnet durch eine Sonde mit einer Bewegungsabfühlvorrichtung und einem zugeordneten Kodierer, wobei elektrische Signale erzeugt werden können, die jeden Wert angeben, um den die Sonde sich bewegt, damit der Kontakt mit der rotierenden Zylinderfläche aufrechterhalten wird und durch Kombinieren der linearen Abstandssignale, die von der Kodiervorrichtung erhalten werden, mit den Winkelpositionssignalen, die aus einem Kodierer abgeleitet werden, der der Drehung des Werkstückes (oder den numerischen Steuersignalen, die in die Werkstück-Antriebsvorrichtung gespeist werden) zugeordnet sind, damit ein Satz von Messungen entsprechend den Winkelpositionen erhalten wird, bei dem der Durchmesser der Komponente berechnet wird, die auch für jede der Winkelpositionen den Wert anzeigen, um den die Achse des zylindrischen Bereiches nicht mit der Achse, um die das Werkstück rotiert, koinzident ist.

19. Vorrichtung nach Anspruch 18, dadurch gekennzeichnet, daß die Rechenvorrichtung zur Berechnung der Steuersignalwerte unter Verwendung von Algorithmen und einer Nachschlagtabelle versehen ist, und ein Speicher zur Speicherung der Steuersignale vorgesehen ist, der bereit ist zum synchronen Auslesen und zum Erzeugen eines Steuersignals für die Schleifkopf-Antriebsvorrichtung während der letzten Stufe des Schleifvorganges.

20. Einrichtung nach Anspruch 19, dadurch gekennzeichnet, daß das Steuersignal für die letzte Stufe des Schleifvorganges die Kombination eines Grund-Steuersignals mit einem Fehlersignal aufweist, in welchem letzteres aus der Meßvorrichtung und der Sondenvorrichtung abgeleitet wird, die den an dem Werkstückteil vorgenommenen Messungen zugeordnet ist, damit die Menge an zu speichernden Daten für die Erzeugung des letzten Steuersignales auf Fehlersignale reduziert wird, die für eine bestimmte Zeit Null sein können.

21. Einrichtung nach einem der Ansprüche 18 bis 20, dadurch gekennzeichnet, daß die Sondenvorrichtung mit der Meßlehre zum Feststellen der oszillierenden Bewegung der Lehre bei rotierendem Werkstück befestigt ist oder eine einzelne Sonde aufweist.

22. Einrichtung nach einem der Ansprüche 13 - 21, dadurch gekennzeichnet, daß die Meßlehre eine bei laufendem Vorgang arbeitende Lehre ist.

23. Einrichtung nach einem der Ansprüche 13 bis 22, bei der eine Rechner-Display-Vorrichtung und eine visuelle Darstellung des Querschnitts der geschliffenen Komponenten angezeigt wird, bei der entweder synchron, oder möglicherweise mit einem Teil der Drehgeschwindigkeit das tatsächliche Werkstück oder die Komponente rotiert, und jede gemessene Unrundheit oder Abweichung von der Kreisform oder Exentrizität relativ zur Rotationsachse in Steuersignale zum Verzerren der Kreisform und/oder der Position relativ zur Drehachse in der visuellen Sichtanzeige der Komponente umgewandelt wird, damit der Fehler in der Komponente und die relative Winkelposition um die Komponente herum in der Sichtanzeige dargestellt wird.

24. Einrichtung nach Anspruch 23, bei der eine solche Abweichung von der Kreisform oder eine Exentrizität in der Sichtanzeige um einen Faktor übertrieben wird, der entweder vorprogrammiert ist oder von dem Benutzer gewählt werden kann, damit ein beliebiger Fehler in der Komponente oder im Werkstück in der Sichtanzeige übertrieben dargestellt wird und mit bloßem Auge sichtbar ist.

## Revendications

1. Une méthode de rectification d'une pièce de vilebrequin, par exemple un maneton, d'après laquelle le composant est engagé par une meule rotative et rectifié jusqu'à ce que sa dimension soit tout juste supérieure, généralement de l'ordre de 50 microns, à la dimension spécifiée ; l'avance de la meule est alors arrêtée pour permettre l'arrêt d'étincelage, qui se déroule au cours d'un tour supplémentaire du composant, puis le composant est mesuré sur une série de positions sur sa circonférence, et les diamètres sont calculés. La méthode est caractérisée par le fait que les valeurs calculées sont mémorisées relativement à la position rotatoire du composant sur lequel elle est mesurée, et un signal de commande de l'avance est produit sur la base de ces informations ; ce signal sera utilisé dans la rectification ultérieur du composant pour régler l'avance de la meule en tenant compte de toute ovalisation détectée au cours des différentes mesures diamétrales effectuées au cours de la vérification, puis la poupée porte-meule est avancée de nouveau pour commencer la rectification en utilisant le signal de commande dérivé des informations calibrées, de sorte que lors de rectification de parachèvement du composant, les points hauts soient éliminés et on obtienne un composant plus circulaire que celui que l'on aurait obtenu autrement.

2. Une méthode conforme à la revendication 1 d'après laquelle la vérification sur des positions multiples du composant est répétée au cours d'une série de rotations successives du composant, et cette vérification est synchronisée avec la rotation du composant afin que chacune des mesures soit effectuée dans la même position angulaire du composant au cours de chacune des rotations, et que l'on obtienne une valeur moyenne du diamètre du composant pour chacune des positions angulaires, calculée avec la série de mesures relevées à chaque position angulaire.

3. Une méthode conforme aux revendications 1 ou 2 d'après laquelle l'opération générale de vérification et de production d'un signal de commande de l'avance pour la rectification de finition de chaque composant est effectuée sur chaque composant pendant son rectification, ou sur chaque « n^{ème}» composant similaire rectifié, ou encore soit à des échéances régulières (par exemple toutes les deux ou trois heures de rectification de pièces), soit une fois par équipe ou journée de travail ou toute autre période pratique (une fois par semaine / mois), en fonction du degré de précision désiré.

4. Une méthode conforme à la revendication 3 d'après laquelle l'opération est effectuée pour chaque composant, un signal de réglage de l'avance dédié est produit pour chaque opération finale de rectification de parachèvement sur chaque composant, et il n'est pas nécessaire de stocker ce signal de réglage de l'avance, pour une période plus longue que celle qui est spécifiée, pour effectuer l'opération de rectification du composant en question.

5. Une méthode conforme à la revendication 3 d'après laquelle l'opération de vérification et de réglage de l'avance n'est effectuée que tous les « n » composants ou au bout d'une période prédéterminée, et comporte également le stockage du signal de correction produit lors due la dernière vérification, qui sera alors utilisé lors de la rectification de parachèvement sur chaque composant, jusqu'à l'opération suivante de vérification et de production d'un signal.

6. Une méthode conforme aux revendications précédentes dans laquelle les erreurs relevées en utilisant des techniques de contrôle de qualité traditionnelles sont combinées avec le signal de commande de l'avance susmentionné.

7. Une méthode conforme aux revendications 1 à 6 appliquée à la région cylindrique d'une pièce pouvant tournant sur son propre axe, comprenant les opérations d'arrêt de la rectification principale tant que la partie cylindrique est surdimensionnée, en enlevant une épaisseur supérieure à l'ovalisation maximale qui, d'après l'expérience ou des observations précédentes, est susceptible de se produire à la suite de la rectification ; la partie cylindrique est alors soumise à un arrêt d'étincelage et mesurée sur une série de positions disposées sur un certain espacement angulaire, sur sa circonférence, et le diamètre est calculé pour chacune des positions auxquelles les mesures sont effectuées. Les diamètres relevés sont mémorisés conjointement avec des données décrivant le position angulaire de la pièce correspondante ; un signal de réglage de l'avance, permettant de contrôler l'avance de la poupée porte-meule au cours d'une opération de rectification finale pour la rectification de la partie cylindrique aux dimensions spécifiées, est produit sur la base des informations sur les positions angulaires et les diamètres de cette même partie, qui ont été mémorisées ; l'avance vers la poupée porte-meule est rétablie et les signaux de réglage de l'avance ainsi produits sont utilisés pour régler l'avance de la meule au cours de l'opération de rectification finale.

8. Une méthode conforme aux revendications 7 dans laquelle on fait tourner la pièce en effectuant un certain nombre de rotations complètes, on effectue une vérification sur la même position angulaire, au cours de chacune des séries de rotations, et une valeur moyenne pour le diamètre à chacune des différentes positions angulaires est calculée et mémorisée comme diamètre pour chacune desdites positions angulaires.

9. Une méthode conforme aux revendications 1 à 8, comprenant également l'opération de détection de la région cylindrique lors de la rotation de la pièce, au cours de l'opération de vérification, et la combinaison de ces informations avec les informations sur la position angulaire et le diamètre pour produire un signal de commande composite pour l'entraînement de la poupée porte-meule, afin d'éliminer ou de réduire, au cours de l'opération de rectification finale, toute excentration de la partie cylindrique qui a été rectifiée.

10. Une méthode conforme aux revendications 1 à 9 dans laquelle on utilise une vérification et un mouvement d'excentration en cours de procédé, et comprenant en outre les stades de mémorisation des diamètres et excentrations pour différentes positions angulaires de la pièce lors de la rotation de celle-ci, et de production de signaux de commande pour commander ultérieurement l'avance de la poupée porte-meule, de façon à réduire les écarts du diamètre cible et de l'«excentration» cible pour la partie de la pièce qui est rectifiée, au cours d'opérations de rectification ultérieures.

11. Une méthode conforme à la revendication 10 comprenant également un stade de rectification progressive au cours de la rectification finale du composant ou de la partie de la pièce, dans le cadre duquel la poupée porte-meule avance avec une série d'incréments et n'effectue aucun mouvement incrémental ultérieur dans une direction d'avance positive (pour l'enlèvement d'une épaisseur additionnelle de la pièce) jusqu'à ce que toutes les données nécessaires pour le calcul du prochain mouvement incrémental aient été calculées à la suite des opérations de vérification et de détection.

12. Une méthode conforme à la revendication 11 dans laquelle l'arrêt d'étincelage est effectué à la fin de chaque stade incrémental et avant la vérification.

13. Une installation pour l'application de cette méthode, conformément à une quelconque des revendications ci-dessus, comprenant : une rectifieuse, un dispositif de serrage et de rotation de la pièce, pour positionner et faire tourner la pièce dans la machine, un ensemble meule et poupée porte-meule, se déplaçant en va et vient vers la pièce, pour tenir et rectifier cette dernière, un dispositif d'entraînement approchant / éloignant la poupée porte-meule de la pièce, un calibre de pièce usinée, permettant de mesurer le diamètre de sections sélectionnées de la pièce, un dispositif de traitement des signaux, indiquant les dimensions mesurées par le calibre, caractérisées par un dispositif de détection de la position de rotation associés à la pièce, et/ou un composant situé dessus et servant à la détermination de la position angulaire pour laquelle le diamètre de la pièce a été calculé, et enfin un ordinateur programmable permettant d'effectuer la conversion des informations mémorisées en un signal de commande permettant de contrôler le dispositif d'entraînement de la poupée porte-meule au cours d'une opération de rectification ultérieure de la pièce et un support d'information pour mémoriser ledit signal de commande.

14. Un appareil conforme à la revendication 13 comprenant en outre un dispositif de mémorisation des signaux de commande de la poupée porte-meule, permettant de contrôler l'avance de la poupée porte-meule, ces signaux étant ajustables pour permettre d'arrêter l'avance de la poupée porte-meule en un point approprié auquel la pièce est encore surdimensionnée par rapport à son diamètre final désiré.

15. Un appareil conforme à la revendication 13 comprenant un dispositif permettant à l'opérateur d'ajuster la position à laquelle l'avance est arrêtée, de façon à déterminer la mesure dams laquelle la sur-dimension à laquelle la rectification est arrêtée et le degré de vérification auquel la vérification est déclenchée.

16. Un appareil conforme aux revendications 13 à 15 dans lequel le dispositif de mémorisation de l'information est permanent et fixe.

17. Un appareil conforme à la revendication 16 dans lequel ce dispositif comprend un disque ou une bande magnétique ou encore une mémoire EPROM ou dispositif similaire.

18. Un appareil conforme aux revendications 13 à 17 comprenant également un capteur doté d'un dispositif de détection du mouvement et un codeur connexe, dans lequel des signaux électriques peuvent être produits pour indiquer la distance de déplacement du capteur pour se maintenir en contact sur la surface cylindrique rotative, et, en alliant les signaux de distance linéaire reçus du codeur aux signaux de position angulaire dérivés d'un codeur associé à la rotation de la pièce (ou les signaux de commande numérique envoyés au dispositif d'entraînement de la pièce), il est possible d'obtenir un ensemble de mesures correspondant aux positions angulaires auxquelles le diamètre du composant est calculé, et qui indique également, pour chacune de ces positions angulaires, l'écart entre l'axe de la région cylindrique et l'axe de rotation de la pièce.

19. Un appareil conforme à la revendication 18 dans lequel un dispositif de calcul est fourni pour calculer les valeurs des signaux de commande en utilisant des algorithmes et une table à consulter, ainsi qu'une mémoire pour mémoriser les signaux de commande présents, pour l'affichage synchrone et pour la production d'un signal de commande pour le dispositif d'entraînement de la poupée porte-meule au cours du stade final de la rectification.

20. Un appareil conforme à la revendication 19 dans lequel ledit signal de commande pour le stade final de la rectification comprend une combinaison entre le signal de commande de base et un signal d'erreur, dans laquelle ce dernier est dérivé du calibre et de la sonde associés aux mesures effectuées sur la pièce, de sorte que la quantité de données à mémoriser pour la production du signal de commande final se réduise à des signaux d'erreur, qui peuvent être parfois égaux à zéro.

21. Un appareil conforme aux revendications 18 à 20, dans lequel le capteur est fixé sur le calibre pour détecter des mouvements oscillatoires du calibre au cours de la rotation de la pièce, ou comprend une sonde unique.

22. Un appareil conforme aux revendications 13 à 21, dans lequel le calibre est un calibre utilisé en cours de fabrication.

23. Un appareil conforme aux revendications 13 à 22, dans lequel un écran d'affichage d'ordinateur et la représentation visuelle de la coupe du composant rectifié sont affichés, en tournant en synchronisation avec la pièce ou un composant de celle-ci, mais éventuellement à une fraction de la vitesse de rotation de la pièce ou du composant, et toute ovalisation, non circularité ou excentration, relativement à l'axe de rotation, est convertie en signaux de commande pour déformer la forme circulaire et/ou la position relativement à l'axe de rotation dans l'affichage visuel du composant, de sorte que l'erreur dans le composant et sa position angulaire relative autour du composant puissent être visibles sur le dispositif d'affichage.

24. Un appareil conforme à la revendication 23, dans lequel cette ovalisation ou cette excentration est exagérée sur l'affichage par un facteur préprogrammé ou sélectionné par l'utilisateur, de sorte que toute erreur dans le composant ou dans la pièce soit exagérée sur l'affichage pour qu'elle puisse être visible à l'oeil nu.
